## Europäisches Patentamt
## European Patent Office
## Office européen des brevets

(11) Veröffentlichungsnummer: **0 098 443**
A2

# (12) EUROPÄISCHE PATENTANMELDUNG

(21) Anmeldenummer: 83106018.1

(51) Int. Cl.³: **G 01 J 3/28**

(22) Anmeldetag: 21.06.83

(30) Priorität: 02.07.82 DE 3224737

(43) Veröffentlichungstag der Anmeldung: 18.01.84
Patentblatt 84/3

(84) Benannte Vertragsstaaten: **DE FR GB IT**

(71) Anmelder: **Bodenseewerk Perkin-Elmer & Co. GmbH, Alte Nussdorfer Strasse 15 Postfach 1120, D-7770 Überlingen/Bodensee (DE)**

(72) Erfinder: **Witte, Wolfgang, Dr., Burgbergring 9, D-7770 Überlingen/Bodensee (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

(54) **Spektrometer.**

(57) Ein mit einer Spaltfunktion des Spektrometers aufgenommenes reales Spektrum wird zusammen mit der Spaltfunktion des Spektrometers auf einen Rechner gegeben. Der Rechner liefert ein hinsichtlich der Spaltfunktion entfaltetes Spektrum höherer Auflösung. Die spektrale Bandbreite dieses entfalteten Spektrums kann über den Rechner verändert werden. Es wird eine vorteilhafte Signalverarbeitung für die Entfaltung angegeben.

EP 0 098 443 A2

## Spektrometer

Die Erfindung betrifft ein Spektrometer mit einem Monochromator, welches ein mit einer Spaltfunktion des Monochromators aufgenommenes reales Spektrum liefert.

Die spektrale Auflösung des Spektrometers wird durch die Spaltbreite des Monochromators bestimmt. Zur Veränderung der spektralen Auflösung werden üblicherweise entweder umschaltbare Spalte fester Breite vorgesehen oder es werden Spalte mit veränderlicher Breite verwendet. Im ersteren Fall kann die spektrale Auflösung des Spektrometers stufenweise, im letzteren Fall kontinuierlich verändert werden.

Solche Vorrichtungen sind mechanisch aufwendig. Bei umschaltbaren Spalten fester Breite muß jeder Spalt ausreichend genau positioniert sein, damit sich beim Umschalten der Spaltbreite möglichst keine Wellenlängenverschiebung ergibt. Bei kontinuierlich einstellbaren Spalten ist die genaue Führung der Spaltbacken aufwendig.

2           0098443

Außerdem ist eine aufwendige mechanische und gegebenenfalls elektronische Steuerung der Spaltbreiten erforderlich.

Bei sehr kleinen Spaltbreiten ergibt sich weiterhin eine recht hohe Toleranz der geometrischen Spaltbreite, besonders bei umschaltbaren Festspalten. Die kleinste realisierbare Spaltbreite liegt geometrisch bei etwa 20 $\mu$m . Solche Spalte werden z.B. in Folien eingeätzt. Die Toleranz der Herstellung solcher Spalte liegt bei mehreren $\mu$m, ist also nicht vernachlässigbar klein.

Schließlich ist die Abhängigkeit des Strahlungsflußes von der geometrischen Spaltbreite ein erheblicher Nachteil. Der Strahlungsfluß ist dem Quadrat der geometrischen Spaltbreite proportional. Bei sehr schmalen Spalten ergibt sich ein kleiner Strahlungsfluß und damit ein ungünstiges Signal-zu-Rauschverhältnis.

Der Erfindung liegt die Aufgabe zugrunde, ein Spektrometer zu schaffen, bei welchem die Spaltanordnung einfach und mit hoher Genauigkeit aufgebaut ist und welches auch bei hoher Auflösung mit einem guten Signal-zu-Rauschverhältnis arbeitet.

Erfindungsgemäß wird diese Aufgabe gelöst durch einen Rechner, dem die Spaltfunktion und das Spektrum zugeführt werden und der ein hinsichtlich der Spaltfunktion entfaltetes Spektrum erzeugt.

Das real gemessene Spektrum ergibt sich durch eine Faltung eines "idealen" Spektrums mit der Spaltfunktion des Monochromators. Die Spaltfunktion des Monochromators ist weitgehend bekannt. Der Rechner kann daher den beobachteten realen Spektrum durch Entfaltung das wahre Spektrum erzeugen. Durch das Rauschen des realen Spektrum und Ungenauigkeit in der

　　　　　　　　　　　0098443

Kenntnis oder der Verarbeitbarkeit der Spaltfunktion im Rechner wird das erzeugte, entfaltete Spektrum nicht genau dem idealen, "wahren" Spektrum entsprechen. Es läßt sich jedoch eine wesentliche Verringerung der spektralen Spaltbreite erzielen, ohne daß dazu die geometische Spaltbreite entsprechend verkleinert zu werden braucht. Es ergibt sich damit eine Verbesserung des Strahlungsflusses und damit wiederum ein verbessertes Signal-zu-Rauschverhältnis.

Es kann bei konstanter geometrischer Spaltbreite des Monochromators die spektrale Spaltbreite des von dem Rechner erzeugten Spektrums veränderbar sein .

Ein Ausführungsbeispiel der Erfindung ist nachstehend unter Bezugnahme auf die zugehörigen Zeichnungen näher erläutert:

Fig. 1　zeigt eine reale Spaltfunktion, d.h. die Funktion der Wellenlänge, mit welcher der Strahlungsfluß innerhalb eines spektralen Intervalls um eine Meßwellenlänge herum von dem Spektrometer bewertet wird.

Fig. 2　zeigt eine idealisierte Spaltfunktion.

Fig. 3　zeigt ein Transmissionsspektrum mit einer Spaltfunktion.

Fig. 4　zeigt Transmissionskurven zur Verdeutlichung der Erfindung.

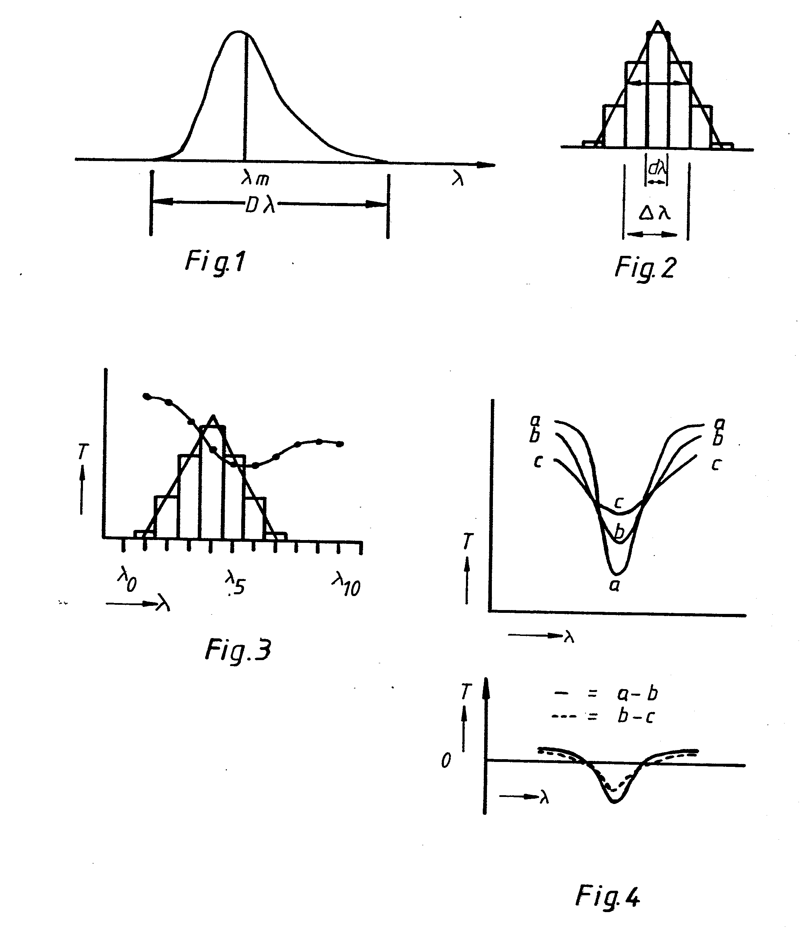

Die Spaltfunktion gibt an, wie der Strahlungsfluß innerhalb eines spektralen Intervalls $D\lambda$ - vom Gerät bewertet wird. An die Stelle des Strahlungsflusses kann auch eine Größe treten, die linear vom Strahlungsfluß abhängig ist, wie z.B. die Transmission T oder die Absorption 1-T. Die Spaltfunktion ist einer "Meßwellenlänge" zugeordnet, die innerhalb der Spaltfunktion liegt. Als Meßwellenlänge kann beispielsweise diejenige Wellenlänge definiert werden, die der durch das Zentrum des Austrittsspalts laufende Achsenstrahl besitzt. Die Meßwellenlänge, die durch den Monochromator einstellbar ist, wird mit $\lambda_m$ bezeichnet. Fig. 1 zeigt eine Spaltfunktion bei Einstellung des Monochroma-tors auf die Meßwellenlänge $\lambda_m$.

Im Idealfall, d.h. bei absolut scharfer Abbildung und optimaler Anpassung der Breiten von Eintritts- und Austrittsspalt ist die Spaltfunktion dreieckförmig, wie dies in Fig. 2 dargestellt ist. In der Praxis wird eine solche Dreickform nur bei sehr breiten Spalten annähernd realisiert. Bei kleineren Spalten ist die Dreieckform mehr oder weniger abgerundet. Dabei macht sich mit zunehmender Wellenlänge eine zunehmende Unsymmetrie bemerkbar, die auf eine vom Gitter verursachte Spaltbildkrümmung zurückzuführen ist.

Das vom Gerät aufgezeichnete reale Spektrum entsteht durch mathematische Faltung des wahren Spektrums, wie es bei unendlich schmalem Spalt gewonnen werden würde, mit der wellenlängenabhängigen Spaltfunktion. Es wird nun aus dem aufgezeichneten, realen Spektrum durch Entfaltung das zugrundeliegende wahre Spektrum oder jedenfalls ein diesem näherkommendes Spektrum ermittelt. Das wahre Spektrum kann theoretisch nur erhalten werden, wenn das aufgezeichnete Spektrum und die Spaltfunktion exakt bekannt sind. Die Kenntnis des Spektrums endlicher Auflösung und der Spaltfunktion ist aber nicht beliebig genau möglich. Das reale Spektrum ist nur mit der Fehlerbreite des Rauschpegels bekannt. Die Spaltfunktion kann ebenfalls nur mir endlichen Fehlergrenzen ermittelt werden. Deshalb ist die Auflösung des entfalteten Spektrums begrenzt, obwohl seine Auflösung theoretisch, d.h. bei fehlerfreien Ausgangsfunktionen, unendlich hoch sein könnte. Der Rauschpegel des aufgenommenen, realen Spektrums und die Ungenauigkeit in der Kenntnis der Spaltfunktion transformiert sich bei den Entfaltung also in eine Begrenzung der Auflösung des entfalteten Sprektrums.

Der Rechner, der die Entfaltung vornimmt, arbeitet zweckmäßigerweise digital. Das erfordert die Unterteilung der Funktionen in diskrete Einzelwerte, die diskreten Wellenlängen zugeordnet sind. Die rechnerisch erzielbare Auslösung ist dabei von der Feinheit der Wellenlängenunterteilung abhängig. Will man die spektrale Bandbreite $\Delta \lambda$ des aufgenommenen Spektrum z.B. im Verhältnis 1 : n verkleinern, dann muß die spektrale Spaltbreite in mindestens n Teilintervalle aufgeteilt werden.

Zum besseren Verständnis soll zunächst stark vereinfacht n = 3 gewählt werden. Es wird weiterhin vereinfachend eine dreieckförmige Spaltfunktion angenommen. Weiterhin wird angenommen, daß die Spaltfunktion innerhalb des kleinen betrachteten Wellenlängenbereich in Form und Halbwertsbreite konstant ist.

Fig. 2 zeigt eine solche dreiecksförmige

Spaltfunktion, deren Fläche zweckmäßigerweise auf den Wert 1 normiert wird. Diese Spaltfunktion mit der Halbwertsbreite $\triangle\lambda$ wird durch Rechecke der Breite $d\lambda$ simuliert. Für n = 3 gilt hier

$$\triangle\lambda = 3\ d\ \lambda\ .$$

Bezeichnet man die Ordinatenwerte der Spaltfunktion mit S, dann wird die Spaltfunktion infolge der Aufteilung in Rechtecke durch sieben Werte

$$S_{-3},\ S_{-2},\ S_{-1},\ S_0,\ S_1,\ S_2,\ S_3$$

simuliert mit

$$\sum_{i=-3}^{3} S_i = 1\ .$$

Fig. 3 zeigt einen Ausschnitt eines Transmissionsspektrums. Das Spektrum wurde mit einem Spektrometer aufgenommen, das eine dreieckförmige Spaltfunktion der Halbwertsbreite $\triangle\ \lambda$ aufweist. In die Figur ist eine Spaltfunktion eingezeichnet in derjenigen Stellung, die für die Messung der Transmission bei einer Meßwellenlänge $\lambda_4$ maßgebend war. Ersetzt man vereinfachend die dreieckförmige Spaltfunktion durch die treppenförmige Spaltfunktion, dann kann man die Ermittlung der registrierten Transmission T durch das Spektrometer aus der wahren Transmission $T^*$ folgendermaßen beschreiben:

Sind $T_1\ T_2, \ldots$ die bei den Wellenlängen $\lambda_1,\ \lambda_2, \ldots$ gemessenen Transmissionswerte und $T_1^*,\ T_2^*, \ldots$ die wahren Transmissionswerte bei den Wellenlängen $\lambda_1,\ \lambda_2, \ldots$, so ergibt sich die gemessene Transmission $T_4$ bei der Wellenlänge $\lambda_4$ aus den wahren Werten $T_1^*$,

$T_2^*, \ldots T_7^*$ zu

$$T_4 = \sum_{i=-3}^{3} S_i \, T_{4+i}^*$$

Allgemein ergibt sich für die Transmission $T_k$ bei der Wellenlänge $\lambda_k$

$$(2) \quad T_k = \sum_{i=-3}^{3} S_i \, T_{k+i}^* \quad .$$

Für beliebige Werte von n gilt

$$(3) \quad T_k = \sum_{i=-n}^{n} S_i \, T_{k+i}^* \quad .$$

Die vorstehenden Zeichnungen beschreiben, wie das aufgezeichnete Transmissionsspektrum mit den Werten $T_k$ aus den wahren Transmissionswerten $T_{k+i}^*$ unter Berücksichtigung einer gestufen Spaltfunktion mit den Werten $S_i$ durch das Spektrometer erzeugt wird. Setzt man für die Transmissionswerte $T_k$ die Werte des von dem Spektrometer tatsächlich aufgezeichneten Spektrums ein und berechnet unter Berücksichtigung der bekannten Werte $S_i$ der Spaltfunktion die Werte $T_{k+i}^*$, so ergeben sich nicht die wahren Transmissionswerte, da die realen Spaltfunktion durch eine Treppenkurve ersetzt wurde. Die wahre Spaltfunktion würde sich erst für den Grenzwert $n \to \infty$ ergeben. Die aus den Gleichungen (3) bei Einsetzen der durch das Spektrometer gemessenen Werte $T_k$ berechenbaren Werte $T_{k+i}^*$ entsprechen jedoch einem Spektrum, daß mit wesentlich höherer Auflösung aufgenommen wird als das von Spektrometer tatsächlich aufgezeichnete Spektrum.

Es gilt jetzt, die der höheren Auflösung entsprechenden Werte $T^*$ rückwärts aus Gleichung (3) zu berechnen.

Gleichung (3) ist eine Gleichung mit $2n + 1$ Unbekannten $T_{k-n}$, $T_{k-n+1}$ ... $T_{k+n}$. Man braucht $2n+1$ Gleichungen, um diese Unbekannten zu ermitteln. Jede neue Gleichung führt aber auch neue Unbekannte ein. Ersetzt man z.B. k durch k+1, dann erhält man zwar eine weitere Gleichung, die aber eine neue Unbekannte $T_{k+1+n}$ einführt. Wie viele Werte T man auch mißt, die Anzahl der Unbekannten ist stets um 2n größer als die Anzahl der Gleichungen.

Die überzähligen Unbekannten sind anschaulich gut verständlich:

Bei der Messung der Transmission $T_1$ in Fig. 3 wurden auch die wahren Werte $T_0$, $T_{-1}$ und $T_{-2}$ vom Spektrometer berücksichtigt. Am anderen Ende des Spektrums bei Messung der Transmission $T_{10}$ in Fig. 3 haben auch die wahren Transmissionen $T_{11}$, $T_{12}$ und $T_{13}$ den Meßwert beeinflußt. Bei diesen äußeren Wellenlängen $\lambda_{-2}$, $\lambda_{-1}$, $\lambda_0$, $\lambda_{11}$, $\lambda_{12}$ und $\lambda_{13}$ liegen aber keine Meßwerte vor. Die Anzahl der vom Gerät erfaßten wahren Transmissionswerte ist um $2n=6$ größer als die Anzahl der vom Spektrometer gemessenen Transmissionswerte.

Das Problem ist grundsätzlich lösbar, wenn man das im Wellenlängebreich von $\lambda_a$ (Anfangswellenlänge) bis $\lambda_e$ (Endwellenlänge) aufgezeichnete Spektrum nur im Bereich von $\lambda_{a+n}$ bis $\lambda_{e-n}$ entfaltet. Man erhält dann $e-a-2n$ Gleichungen mit ebensovielen unbekannten $T_{a+1}$, $T_{a+n+1}$ ... $T_{e-n}$. Die praktische Durchführung dieser Rechnung im Rechner ist jedoch sehr aufwendig.

9                                      0098443

Eine andere, einfachere Verarbeitung der gemessenen
Signale $T_a$, $T_{a+1}$ ... $T_e$ wird nachstehend angegeben:

Für die Rechnung werden die gemessenen Transmissionswerte $T_a$, $T_{a+1}$ ... $T_e$ herangezogen. An beiden Enden
wird das Spektrum um n-Werte extrapoliert:
$T_{a-n}$ ... $T_{a-1}$ und $T_{e+1}$ ... $T_{e+n}$. Die extrapolierten
Werte sind nicht sehr kritisch, man kann z.B.

$$T_{a-n} = \ldots T_{a-1} = T_a \text{ und } T_{e+1} = \ldots = T_{e+n} = T_e$$

setzen. Gesucht wird dasjenige höher aufgelöste
Spektrum, das mit der Spaltfunktion gefaltet das
gemessene Spektrum ergibt. Dieses Spektrum sei
"Zielspektrum" genannt. Es wird zunächst ein erstes
Zielspektrum T' angenommen, das noch nicht mit dem
endgültigen Zielspektrum übereinstimmt, aber ihm doch
ähnlich ist. Dazu wird

$$T'_k = T_k$$

gesetzt, d.h. das erste Zielspektrum wird mit dem
aufgezeichneten und an den Enden extrapolierten
Spektrum gleichgesetzt. Jetzt wird berechnet, welches
Spektrum das Spektrometer aufzeichnen würde, wenn
das wahre Spektrum diesem ersten Zielspektrum entspräche und das Spektrometer mit der treppenförmigen
Spaltfunktion arbeiten würde. Das erste Zielspektrum
$T'_k$ wird also gefaltet. Man erhält ein neues
"registriertes" Spektrum $\bar{T}'_k$ :

$$(4) \quad \bar{T}'_k = \sum_{i=-n}^{n} S_{ik} T'_{k+i}$$

Dabei ist k eine Laufzahl, welche die Wellenlänge charakterisiert. Es ist k = a, a+1,... e. Da die Spaltfunktion im allgemeinen wenn auch geringfügig wellenlängenabhängig ist, wird die Spaltfunktion hier durch die Größen $S_{ik}$ bezeichnet, um die Wellenlängenabhängigkeit, d.h. die Abhängigkeit von k anzudeuten.

Dieses erste errechnete Spektrum stimmt natürlich nicht mit dem tatsächlich registrierten Spektrum T überein. Der Fehler ist

$$(5) \quad \Delta T'_k = T_k - \bar{T}'_k \quad .$$

Die Werte $\Delta T'_k$ liefern das erste Fehlerspektrum. Es wird jetzt das erste Zielspektrum $T'_k$ um diesen Fehler korrigiert. Es ergibt sich ein zweites Zielspektrum $T''_k$:

$$(6) \quad T''_k = T'_k + \Delta T'_k .$$

Dieses zweite Zielspektrum wird jetzt wieder nach Maßgabe von Gleichung (4) gefaltet, wobei in Gleichung (4) $T'_{k+i}$ durch $T''_{k+i}$ ersetzt wird. Man erhält ein zweites errechnetes Spektrum $\bar{T}''_k$ und ein zweites Fehlerspektrum $\Delta T''_k$:

$$(7) \quad \Delta T''_k = T_k - \bar{T}''_k \quad .$$

Dieses Verfahren wird periodisch wiederholt, bis das Fehlerspektrum unterhalb einer vorgegebenen Fehlergrenze liegt. Diese Fehlergrenze darf natürlich nicht kleiner sein als die Meßunsicherheit des aufgezeichneten Spektrums, also z.B. nicht kleiner als die durch den Rauschpegel bestimmte Meßunsicherheit.

Allgemein ergibt sich für den Zyklus m: nach m-1 Rechenzyklen erhält man aus dem Zielspektrum $T_k^{(m)}$ durch Faltung das errechnete Spektrum $\bar{T}_k^{(m)}$

$$(8) \quad \bar{T}_k^{(m)} = \sum_{i=-n}^{n} S_{ik} T_{k+i}^{(m)} \quad .$$

Das Fehlerspektrum errechnet sich zu

$$(9) \quad \triangle T_k^{(m)} = T_k - \bar{T}_k^{(m)} \quad .$$

Schließlich wird hieraus das neue Zielspektrum $T_k^{(m+1)}$ errechnet:

$$(10) \quad T_k^{(m+1)} = T_k^{(m)} + \triangle T_k^{(m)} \quad .$$

Es erscheint zunächst paradox, durch Faltung des ursprünglich aufgezeichneten Spektrums, also durch einen Vorgang, welcher die Absorptionsbanden verbreitert, die Auflösung verbessern zu wollen. Tatsächlich ergeben sich aber durch die anschließende Differenzbildung Informationen im Sinne einer Erhöhung der Auflösung. Das läßt sich durch die nachstehenden Betrachtungen plausibel machen:

Es werde von einem als bekannt angenommenen wahren Spektrum ausgegangen. Das Spektrometer verzerrt dieses Spektrum nach Maßgabe der Spaltfunktion. Es wird dann ein Fehlerspektrum als Differenz zwischen aufgezeichnetem und wahrem Spektrum gebildet. Wird jetzt das aufgezeichnete Sektrum nochmals durch Faltung mit der Spaltfunktion verzerrt, dann ergibt sich als Differenz zwischen diesem neuen Spektrum und dem registrierten Spektrum ein Fehlerspektrum, das dem ersteren Fehlerspektrum ähnlich ist. Das Verfahren beruht also darauf, daß man das erstere gesuchte aber nicht ermittelbare Fehlerspektrum durch das letztere, dem ersteren ähnliche und errechenbare Fehlerspektrum ersetzt. Das ist in Fig. 4 dargestellt.

Im oberen Teil von Fig. 4 ist eine wahre Absorptionsbande a dargestellt. Sie wird von dem Spektrometer zu der Absorptionsbande b verzerrt. Diese wird wiederum rechnerisch durch Faltung zu der Absorptionsbande c verzerrt.

Im unteren Teil der Figur ist ausgezogen das in der Praxis nicht ermittelbare Fehlerspektrum a - b und gestrichelt das in der Praxis errechenbare Fehlerspektrum b-c gezeigt. Man erkennt deutlich die Ähnlichkeit der beiden Fehlerspektren.

Durch die beschriebene Signalverarbeitung erfolgt eine deutliche Erhöhung des wirksamen Strahlungsflusses gegenüber bekannten Spektrometern und damit ein günstigeres Signal-zu Rauschverhältnis. Bekanntlich ändert sich der Strahlungsfluß proportional zum Quadrat der Spaltbreite, weil einmal der geometrische Lichtleitwert und zum anderen das Spektralintervall $\Delta \lambda$ sich mit der Spaltbreite ändert. Bei der beschriebenen Signalverarbeitung kann der geometrische Lichtleitwert auf einem recht hohen Wert konstant gehalten werden. Der pro spektraler Bandbreite zur Verfügung stehende Strahlungsfluß ist nur noch dieser Bandbreite selbst proportional.

Wegen des Rauschpegels kann die Auflösung rechnerisch nicht beliebig verbessert werden. Soll ein großer Bereich der spektralen Bandbreite überstrichen werden, dann kann es erforderlich sein, das Spektrometer aus eine mittlere Spaltbreite einzustellen und die kleineren Bandbreiten nach dem geschilderten Verfahren zu berechnen.

Größere Bandbreiten lassen sich einfach durch einmalige Faltung des aufgezeichneten Spektrums mit einer entsprechend breiten Spaltfunktion errechnen.

Patentansprüche

1. Spektrometer mit einem Monochromator, welches ein mit einer Spaltfunktion des Spektrometers aufgenommenes reales Spektrum liefert, gekennzeichnet durch einen Rechner, dem die Spaltfunktion und das Spektrum zugeführt werden und der ein hinsichtlich der Spaltfunktion entfaltetes Spektrum erzeugt.

2. Spektrometer nach Anspruch 1, dadurch gekennzeichnet, daß bei konstanter geometrischer Spaltbreite des Monochromators die spektrale Spaltbreite des vom Rechner erzeugten Spektrums veränderbar ist.

3. Spektrometer nach Anspruch 2, dadurch gekennzeichnet, daß zur Veränderung der spektralen Spaltbreite über einen großen Bereich

   (a) die geometrische Spaltbreite des Spektrometers auf einen mittleren Wert gelegt ist,

   (b) kleinere spektrale Spaltbreiten durch Entfalten des aufgezeichneten Spektrums hinsichtlich der Spaltfunktion mittels des Rechners erzielbar sind und

   (c) größere spektrale Spaltbreiten durch Falten des aufgezeichneten Spektrums mit einer verbreiteten Spaltfunktion ebenfalls mittels des Rechners erzielbar sind,

4. Spektrometer nach einem der Ansprüche 1 bis 3, dadurch gekennzeichnet, daß der Rechner

(a) Mittels zur Speicherung der bei Wellenlängen $\lambda_a$, $\lambda_{a+\gamma} \cdots \lambda_e$ vom Spektrometer gemessenen Transmissionswerte $T_a$, $T_{a+\gamma} \cdots T_e$, enthält sowie

(b) Mittel zur Speicherung extrapolierter Transmissionswerte $T_{a-n} \cdots T_{a-1}$ und $T_{e+1} \cdots T_{e+n}$, wobei die gespeicherten gemessenen oder extrapolierten Transmissionswerte zusammen ein erstes Zielspektrum $T_k'$ bilden,

(c) Mittel zur Bildung von

$$\bar{T}_k^{(m)} = \sum_{i=n}^{n} S_{ik} T_{k+i}^{(m)}$$

in aufeinanderfolgenden Rechenschritten ausgehend von dem ersten Zielsprektrum $T_k'$, wobei

(m) die Laufzahl des Rechenschritts
    $m = 1,2\ldots$,
k eine die Wellenlänge charakterisierende Laufzahl
i eine die Abszisse der Spaltfunktion charakterisierende Laufzahl und
2n+1 die Anzahl der Stufen der Spaltfunktion ist

(d) Mittel zur Bildung eines Fehlerspektrums

$$\Delta T_k^{(m)} = T_k - \bar{T}_k^{(m)}$$

in jedem Rechenschritt, wobei $T_k$ die gemessenen oder extrapolierten Transmissionswerte sind, und

(e) Mittel zur Bildung eines neuen Zielspektrums

$$T_k^{(m+1)} = T_k^{(m)} + \Delta T_k^{(m)},$$

wobei die Rechenschritte fortgesetzt werden, bis das Fehlerspektrum unterhalb eines vorgegebenen Niveaus liegt.

Fig.1

Fig. 2

Fig.3

Fig.4